# FASCICULE DE BREVET EUROPEEN

(11) **EP 1 694 611 B1**
(45) Date de publication et mention de la délivrance du brevet: **18.07.2007**
(21) Numéro de dépôt: 04821087.6
(22) Date de dépôt: 10.12.2004
(51) Int. Cl.: C04B 14/48, C04B 28/02, E04C 5/01

(54) **BETON DE FIBRES METALLIQUES**
METALLFASERBETON
METAL FIBER CONCRETE

(30) Priorité: 16.12.2003 EP 03104736
(43) Date de publication de la demande: 30.08.2006
(73) Titulaire: TREFILARBED BISSEN S.A., 7703 Bissen (LU)
(72) Inventeur: DESTREE, Xavier, B-1310 La Hulpe (BE)
(74) Mandataire: Ocvirk, Philippe
(86) Numéro de dépôt international: PCT/EP2004/053399
(87) Numéro de publication internationale: WO 2005/068388

(56) Documents cités:
- WO-A-02/18291
- XAVIER DESTR¹E: "Twincone SFRC Structural Concrete" FIBER REINFORCED CONCRETE, MODERN DEVELOPMENTS, mai 1995 (1995-05), pages 77-86, XP008030512 VANCOUVER, CANADA cité dans la demande
- "Product Data Sheet - DRAMIX RL-45/50-BN" INTERNET CITATION, [Online] 2002, XP002279408 Extrait de l'Internet: URL:http://www.bekaert.com/BUILDING/brochu re/RL-4550-BN_groen_GB.pdf> [extrait le 2004-05-10]

## Description

### Introduction

La présente invention concerne un mélange de béton de fibres métalliques pour la fabrication d'éléments en béton, notamment pour applications structurelles.

### Etat de la technique

Les constituants du béton sont très fragiles sous l'effet des contraintes de traction et des charges d'impact, et il a donc toujours fallu renforcer le béton pour tenir compte de ce manque de ductilité. Dans de nombreux cas, l'élément de béton est gardé intact au moyen d'une armature de barres crénelées ou de treillis. Dans certaines applications, des fibres sont également employées, généralement en complément de l'armature traditionnelle.

Dans la pratique, le recours nécessaire à de telles armatures est plutôt contraignant, notamment dans les constructions dans lesquelles les éléments de béton sont coulés sur place en coffrage. Lors de la réalisation de dalles de plancher dans un bâtiment par exemple, le façonnement et le positionnement des barres d'acier ou treillis dans le coffrage sont des opérations complexes et requièrent, dans le planning de chaque étage du bâtiment, une durée de réalisation considérable.

Afin de pouvoir se passer d'armature traditionnelle dans la réalisation de planchers, il a été proposé de réaliser des dalles uniquement renforcées de fibres métalliques.

Une technique de ce genre est couramment utilisée pour la réalisation de dalles industrielles sur mauvais sol, nécessitant pour bénéficier d'un appui stable, d'appuyer les dalles sur un réseau de pieux fichés dans le sol plus stable à plusieurs mètres de profondeur. Suivant cette technique le plancher, armé de fibres d'acier uniquement, est posé sur des pieux espacés d'une distance de 2,40 à 6 m suivant les cas, pour des épaisseurs respectivement de 20-25 cm à 30-40 cm, ce qui se caractérise donc par un rapport d'élancement (portée/épaisseur) compris entre 15 et 20.

Un tel plancher a par exemple été réalisé avec des fibres connues sous le nom TWINCONE (fibres droites à extrémités coniques), tel que décrit dans l'article "Twincone SFRC Structural Concrete" par Xavier Destrée (cf. Fiber Reinforced Concrete, Modern Developments, Editeurs : N.Banthia, S.Mindess, University of British Columbia, Vancouver, B.C. Canada, Mars 1995, pp. 77-86). Il y est question d'une portée de 5,66 m par 6 m pour une dalle de 35 cm d'épaisseur, soit d'élancement 600/35=17, avec une surépaisseur de 15 cm par 1 m x 1 m au dessus de chaque pieux, en utilisant un béton armé de 45 kg/m³ de fibres d'acier TWINCONE.

Un autre exemple d'un tel plancher est présenté dans l'article intitulé "Structural Application Of Steel Fibre As Principal Reinforcing: Conditions-Design-Examples", par Xavier Destrée (cf. RILEM Proceedings PRO 15, of the Fifth International Rilem Symposium, Fibre-Reinforced Concretes(FRC) BEFIB 2000, Lyon, France 13-15 septembre 2000, Editeurs P. Rossi et G. Chanvillard, pp. 291-301). On y décrit une réalisation de portée 3,60 m par 3,60 m d'un plancher de 25 cm d'épaisseur, donc d'élancement 360/25=14,4, armé de 45 kg/m³ de fibres d'acier. Pour cette application, des fibres d'acier d'une longueur comprise entre 54 mm et 60 mm et d'un diamètre de 1 mm ont été utilisées à raison, selon les cas, de concentrations pondérales comprises entre 40 et 50 kg/m³.

Ces exemples de réalisations d'éléments structuraux en béton renforcé uniquement de fibres métalliques sont assez limités, et concernent des rapports d'élancement (portée/épaisseur) entre 15 et 20. En outre, les concentrations en fibres utilisées sont, en pratique, les maximales possibles en condition de chantier avec une formule de béton optimale permettant encore d'obtenir une ouvrabilité compatible avec les techniques de mélange, de transport et de pose du béton sur chantier.

Si cette technique de dalles sur pieux est intéressante pour la réalisation de planchers industriels, elle n'est pas transposable pour la construction de dalles-plancher d'immeubles, par exemple, pour lesquelles on à affaire à des rapports élancement plus élevés, de l'ordre de 25 à 35.

Afin d'armer des dalles-plancher d'un élancement de 25 à 35, il faudrait donc augmenter l'efficacité du renforcement obtenu par les fibres d'acier. Selon l'abondante littérature scientifique concernant les bétons armés de fibres d'acier, il apparaît qu'un facteur important est l'augmentation du coefficient de forme (Longueur /diamètre) des fibres (cf. Perumalsamy N. Balaguru, Surendrah P.Shah dans "Fiber Reinforced Cement Composites", 1992 McGraw-Hill, p.54 Chapitre 3) permettant ainsi d'augmenter la performance. Par conséquent, selon la pratique habituelle, il faudrait augmenter le coefficient de forme en réduisant le diamètre des fibres et en augmentant leur longueur, et on pourrait en outre améliorer leur ancrage ou encore augmenter la concentration pondérale en fibres d'acier.

Dans les applications connues décrites ici plus haut de dalles structurelles avec les fibres d'acier comme seule armature, il n'est pas possible, dans la pratique, d'augmenter le coefficient de forme et la concentration sous peine de rendre inutilisable le béton en conditions de chantier par manque d'ouvrabilité et mélange imparfait des fibres.
D'autres essais (cf. "Bending Test and Interpretation" par Lucie Vandewalle et David Dupont, Rilem proceedings PRO31 "Test and Design Methods for Steel Fibre Reinforced Concrete-Background and Experiences", 2003 , Edité par B. Schnütgen et L. Vandewalle, pp. 1-13) ont montré que des bétons de fibres parmi les plus performants, de type C25/30 avec 75 kg/m³ de fibres de diamètre 0,9 mm et longueur 60 mm (L/d = 65), suivant les essais de flexions P-Cmod (crack mouth opening displacement), apportent seulement 30% d'augmentation de résistance ultime par rapport à la résistance de fissuration.

Ce supplément de résistance assez limité, malgré l'augmentation importante de concentration en fibres et du coefficient de forme, ne permet pas de répondre aux exigences de dimensionnement d'un plancher-dalle avec élancement entre 25 et 35.

En effet, dans un plancher-dalle, la contrainte de flexion résultant des moments de flexion est proportionnelle à (l/h)², le carré du rapport portée sur épaisseur, et il faudrait donc plus d'un doublement de la résistance à la flexion pour permettre un rapport d'élancement entre 25 et 35. Ainsi, les bétons de fibres traditionnels n'ont jusqu'à présent pas permis de réaliser des éléments structuraux avec un tel élancement.

En définitive, l'utilisation de bétons de fibres métalliques pour la réalisation d'éléments structuraux reste très limitée. En effet, on considère généralement que les fibres ne peuvent pas constituer une alternative au renforcement conventionnel, mais jouent uniquement un rôle de renforcement complémentaire. Par conséquent, selon la pratique générale, le renforcement conventionnel de barres d'acier doit être placé de sorte à supporter les efforts de traction, tranchants et de compression, alors que le rôle des fibres consiste à améliorer la résistance de la matrice. Dans ces bétons de fibres métalliques traditionnels, le dosage en fibres est typiquement de l'ordre de 30 à 50 kg/m³, et l'on emploie des fibres présentant un coefficient de forme entre 50 et 100.

Une exception aux bétons de fibres traditionnels est constituée par le béton ductile ultra haute performance (BUHP), tel que décrit dans WO 95/01316. Il s'agit d'un béton de haute technologie au comportement particulier qui est préparé à partir d'un mélange comprenant des éléments granulaires au plus égale à 800 µm et des fibres métalliques de longueur comprise entre 4 et 20 mm. Le rapport entre la longueur moyenne des fibres et la grosseur maximale des éléments granulaires est au moins égal à 10 et le volume des fibres métalliques est de préférence autour de 2,5 % du volume du béton après la prise, soit de l'ordre de 200 kg/m³. Ce mélange permet de fabriquer des éléments de béton sans armature métallique classique. Il est à noter que le BUHP est n'est pas comparable au béton traditionnel, car il ne comporte pas de granulats traditionnels (tous ses composants minéraux sont de taille inférieure à quelques millimètres) et contient des fibres de petites dimensions en une proportion très supérieure à la normale. Le BUHP a déjà été utilisé dans un certain nombre d'application de référence, mais on comprendra que le BUHP reste un béton de haute technologie, qui implique un coût de revient élevé et qui n'est donc pas adapté pour une utilisation courante dans des constructions classiques.

Il apparaît donc que, mis à part pour le cas du BUHP, les bétons de fibres métalliques sans armature passive sont d'une utilisation réduite, et ne permettent notamment pas la réalisation d'éléments structurels du type dalle-plancher avec un élancement supérieur à 20.

Il serait bon de disposer d'un mélange de béton de fibres métalliques facile à mettre en oeuvre et peu onéreux, qui permette la fabrication d'éléments de type plan avec un élancement élevé adaptés à des applications structurelles, et ce sans aucune armature traditionnelle.

### Description générale de l'invention revendiquée avec ses principaux avantages.

Conformément à l'invention, un mélange de béton de fibres métalliques à base de ciment, d'éléments granulaires et d'eau comprend des fibres métalliques qui ont un diamètre compris entre 1,15 mm et 1,8 mm, et un coefficient de forme compris entre 35 et 45. La quantité de ces fibres métalliques dans le mélange est telle que la masse de celles-ci est d'au moins 80 kg/m³ de béton durci. La quantité de fibres métalliques est donnée ici par rapport au volume du béton durci (après la prise), comme il est d'usage pour les bétons.

Par l'expression "coefficient de forme" on désigne le rapport longueur sur diamètre de la fibre. Si la fibre n'a pas une forme généralement cylindrique, on peut prendre en compte un diamètre correspondant à celui d'un cylindre de section équivalente. De plus, dans le cas où la fibre n'est pas droite, on peut utiliser comme longueur la mesure de la distance séparant les extrémités.

On prépare le mélange de béton selon l'invention en mélangeant et malaxant les constituants solides et de l'eau, de façon en soi connue. Une tel mélange, après malaxage, coulage et durcissement dans un moule ou coffrage, produit un corps solide en béton de fibres métalliques.

La présente invention concerne donc également un béton de fibres métalliques comprenant un corps de matrice cimentaire incluant des fibres métalliques et obtenu par durcissement d'un mélange hydraulique à base de ciment et d'eau, dans lequel les fibres métalliques ont un diamètre d'au moins 1,15 mm et de 1,8 mm au maximum, un coefficient de forme compris entre 35 et 45, et sont dosées à raison d'au moins 80 kg/m³ de béton.

On appréciera que le mélange de béton selon l'invention permet la réalisation d'un élément en béton de fibres métalliques avec un rapport d'élancement supérieur à 20, et notamment de l'ordre de 25 à 35, qui présente un bon renforcement en flexion et effort tranchant, et est donc utilisable dans des application structurelles.

Ainsi, le mélange de béton selon l'invention permet la réalisation d'éléments de béton à usage structurel avec un élancement élevé, et ce sans armatures traditionnelles. La présente invention, qui propose donc un renforcement uniquement par des fibres métalliques au lieu de les utiliser en complément de barres ou treillis métalliques, utilise en outre un dimensionnement de fibres inhabituel. En effet, de manière surprenante et contrairement à la pratique conventionnelle, les performances du béton selon l'invention sont obtenues avec des fibres métalliques qui ont un faible coefficient de forme et un diamètre plus important qu'à l'habitude. En outre, les fibres sont ajoutées dans des quantités sensiblement supérieures à la pratique habituelle.

On appréciera encore que le mélange de béton selon l'invention permet de réaliser un béton armé et prêt à l'emploi qui présente une grande ouvrabilité et une bonne pompabilité, et est donc compatible avec les techniques de mélange, transport et pose du béton sur chantier.

Alors qu'on considère généralement que les bétons de fibres traditionnels sans armatures ne peuvent pas être utilisés comme bétons de structure, c'est-à-dire pour la fabrication de poutres, poteaux ou dalles, le béton selon l'invention constitue au contraire un matériau particulièrement bien adapté pour de telles applications. On notera également que grâce à son comportement amélioré, le béton selon l'invention est particulièrement adapté pour des éléments structurels plans tels que des dalles-planchers dont le rapport d'élancement peut aller jusqu'à 35. Le mélange de béton selon l'invention pourra donc être avantageusement utilisé pour la réalisation de dalles-plancher coulées en place sur coffrage, éliminant ainsi le besoin d'armature traditionnelle, et simplifiant sensiblement la réalisation de nombre de constructions.

En proposant un mélange permettant la réalisation de tels éléments de béton, la présente invention surmonte le préjugé technique selon lequel un renforcement par fibres seules ne suffit pas pour des applications structurelles. En outre, les dimensions de fibres métalliques et le dosage sélectionnés pour la réalisation du mélange de béton selon l'invention vont à l'encontre des considérations habituelles, qui recommandent une augmentation du coefficient de forme pour accroître l'efficacité du renforcement. Enfin, les dimensions des fibres métalliques dans le mélange selon l'invention permettent de travailler à des dosages élevés, sans compromettre l'ouvrabilité du mélange.

Dans la pratique, l'élimination des barres d'aciers et treillis métalliques simplifie sensiblement la réalisation d'éléments en béton. Cela est particulièrement appréciable pour la réalisation d'éléments coulés en place sur coffrage, car les conditions de chantier peuvent être difficiles, mais également pour des éléments préfabriqués.

De préférence, les fibres métalliques ont un coefficient de forme de l'ordre de 40, et leur longueur est comprise entre 45 et 65 mm. La quantité de fibres métalliques est telle qu'elle représente préférablement entre 80 et 180 kg/m³ du béton durci. Un mélange de béton basé sur ces valeurs préférées permet notamment de garantir une bonne ouvrabilité et pompabilité du mélange. Cela permet une utilisation aisée du mélange selon l'invention à la manière d'un béton prêt à l'emploi.

On utilisera de préférence des fibres métalliques fabriquées en fil d'acier, obtenues par exemple par tréfilage ou laminage. Bien que des fibres d'acier tréfilé droites et lisses soient préférées, on peut utiliser une variété de fibres métalliques de forme et rugosité de surface différentes, dans la mesure où elles ont un coefficient de forme et un diamètre minimal conformes à l'invention. On pourra par exemple employer des fibres ondulées, crénelées, avec crochets ou à extrémités applaties, ou présentant une combinaison de ces moyens d'ancrage.

Mis à part les fibres métalliques, les autres composants du béton sont de préférence ceux des bétons traditionnels. Typiquement, le ciment a une taille de grains comprise entre 1 et 100 µm et les éléments granulaires comprennent des éléments fins et grossiers, tels que par exemple du sable ayant une taille de grains entre 1 et 5 mm ainsi que des granulats de grosseur comprise entre 5 et 25 mm (dont les granulats de grosseur 5/15 mm constituent préférablement les deux tiers de la masse des éléments grossiers).

En outre, le mélange selon l'invention pourra comprendre un certain nombre d'adjuvants conventionnels, tels que plastifiant, super-plastifiant, accélérateur de durcissement, retardateur de prise, entraîneur d'air, etc.

Le mélange de béton selon l'invention est adapté, outre l'exemple particulier des dalles-planchers, à la réalisation d'une diversité d'éléments de béton, qu'ils soient structurels ou décoratifs. L'invention se révèle toutefois particulièrement intéressante pour la réalisation d'éléments structurels, puisque l'emploi d'armatures traditionnelles n'est plus nécessaire. On notera donc que le mélange selon l'invention peut être utilisé pour la réalisation d'éléments de bétons du type: dalle-plancher, voile, mur de soutènement, semelle de fondation, poutre ou colonne.

Un autre exemple d'application d'un béton selon l'invention concerne les radiers généraux qui sont formés d'une dalle générale sur laquelle s'érigent les colonnes ou les voiles depuis le niveau de fondation fini. Le radier est construit sous toute la surface d'emprise du bâtiment, donc sur toute sa longueur et sa largeur. L'épaisseur du radier est essentiellement fonction aussi de la nature du sol et de la surcharge occasionnée par le bâtiment. Généralement l'épaisseur pour les bâtiments courants est comprise entre 300 mm et 1000 mm. Un tel radier peut être construit au moyen d'un mélange de béton selon l'invention, où le béton armé de fibres remplace complètement le béton armé traditionnel.

### Description à l'aide des Figures

D'autres particularités et caractéristiques de l'invention ressortiront de la description détaillée de quelques modes de réalisation avantageux présentés ci-dessous, à titre d'illustration, en se référant aux dessins annexés. Ceux-ci montrent: 1
- Fig.1:: une courbe charge - flèche pour une dalle circulaire (A) de 1,50 m de diamètre fabriquée avec le mélange 1;
- Fig.2:: une courbe charge - flèche pour une dalle circulaire (A) de 1,50 m de diamètre fabriquée avec le mélange 2
- Fig.3:: une courbe charge - flèche pour une dalle circulaire (B) de 2,00 m de diamètre fabriquée avec le mélange 1 ; et
- Fig.4:: une courbe charge - flèche pour une dalle circulaire (B) de 2,00 m de diamètre fabriquée avec le mélange 2.

Quelques exemples de réalisation de dalles fabriquées avec un béton selon l'invention sont décrits plus en détails ci-dessous.

Ces dalles sont obtenues à partir de variantes préférées du présent mélange de béton, et sont à base de ciment, d'éléments granulaires fins et grossiers et d'eau, et comprennent des fibres métalliques qui ont un diamètre dans l'intervalle de 1,15 mm à 1,8 mm, un coefficient de forme entre 35 et 45, et sont dosées à hauteur d'au moins 80 kg/m³ de béton durci.

Un élément de béton obtenu avec un mélange selon l'invention présente une résistance élevée à la fissuration pour des élancements jusqu'à 35 et est avantageusement utilisable comme dalle-plancher, voile, mur de soutènement, poutre, colonne, semelle de fondation, radier, ou pour tout élément structurel ou décoratif.

### Exemple 1:

Deux types de mélanges (mélanges 1 et 2) conformes à l'invention ont été réalisés pour confectionner des dalles circulaires, de diamètre 1,50 m et 15 cm d'épaisseur d'une part (type A), et de diamètre 2,00 m et 20 cm d'épaisseur d'autre part (type B).

Les proportions pour ces deux mélanges sont reportées dans le tableau 1 ci-dessous:

**Tableau 1**

| | mélange 1 | mélange 2 |
|---|---|---|
| teneur en ciment : | 360 kg/m³ | 360 kg/m³ |
| granulats de 0 à 15 mm | 1800 kg/m³ | 1800 kg/m³ |
| rapport Eau/Ciment | 0,50 | 0,50 |
| superplastifiant | 1% de la quantité de ciment | 1 % de la quantité de ciment |
| fibres d'acier (*en fil d'acier ondulé de résistance à la traction de 850 N*/*mm²)* | | |
| dosage : | 120 kg/m³ | 100 kg/m³ |
| diamètre : | 1,15 mm | 1,3 mm |
| longueur : | 45 mm | 50 mm |

On notera que ces formulations sont relativement classiques en ce qui concerne les constituants traditionnels du béton, c'est-à-dire le ciment, les granulats et l'eau. Les mélanges obtenus présentaient une fluidité permettant la pose et le pompage du béton sans difficulté aucune.

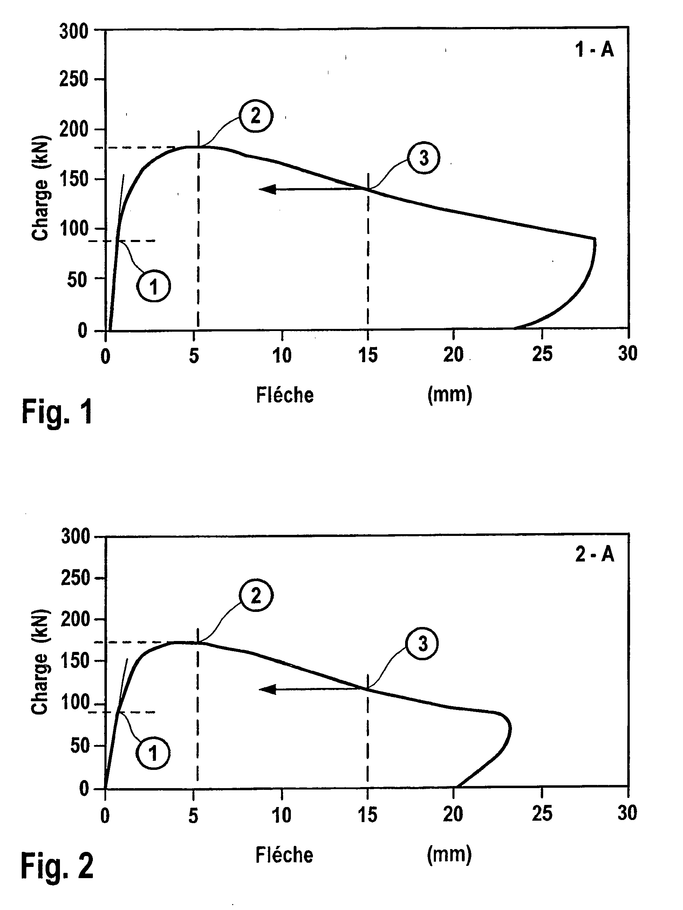

Les dalles circulaires obtenues à partir de ces deux mélanges ont été soumises à des essais de flexion. Ces dalles ont été appuyées le long de leur bord et soumises à une charge ponctuelle centrale avec enregistrement de la flèche au centre de celles-ci. Les résultats des essais sont illustrés sur les Figs.1 à 4, sur lesquelles les indices 1, 2 et 3 indiquent respectivement, la charge de fissuration, la charge maximale enregistrée et la charge résiduelle pour une flèche de respectivement 15 mm et 20 mm.

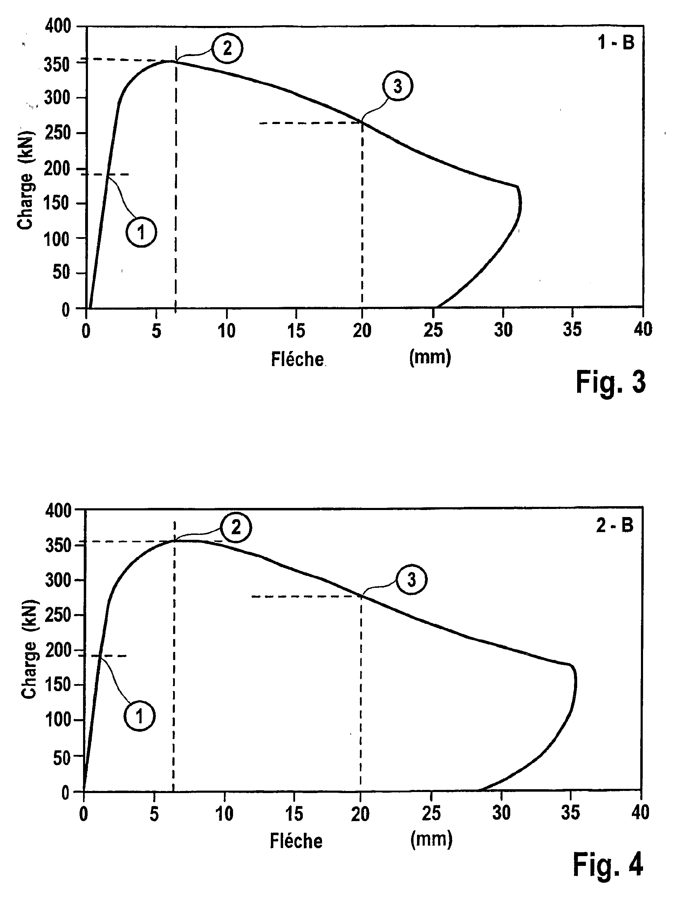

Les essais de flexion sur les dalles circulaires montrent que l'on obtient des charges ponctuelles de première fissuration de 90 kN pour le diamètre 1,50 m avec les mélanges 1 et 2 (voir figs.1 et 2) et de 180 kN pour le diamètre 2,00 m avec les mélanges 1 et 2 (voir Figs.3 et 4).

On obtient également des charges ponctuelles de rupture de respectivement 180 kN et 350 kN.

Pour des déflexions mesurées de plus de 15 et 20 mm respectivement pour la dalle de diamètre 1,50 m et 2,00 m, la charge ponctuelle résiduelle excédait encore sensiblement la charge de première fissure.

Notons encore que dans tous les cas, la face périmétrique des dalles après fin de l'essai comptait entre 15 et 30 fissures radiales, et enfin qu'aucun poinçonnement de ces dalles, dans tous les cas, n'a été constaté.

Ces constatations révèlent un comportement des ces dalles étant stable et contrôlé, très au-delà des limites élastiques et dépassant celles-ci de plus de 100% et donc pas seulement de 30% suivant la technique antérieure de renforcement par fibres décrite dans l'article "Bending Test and Interpretation" de Lucie Vandewalle et David Dupont (voir plus haut).

Un mélange de béton du type 1 ou 2 convient par exemple pour la réalisation d'une dalle plancher d'étage type, d'épaisseur 20 cm et portée par des colonnes de 25 cm x 25 cm de section et espacées de 6 m dans les deux directions x et y. Ce plancher supporte une charge de service d'au moins 7 kN/m².

### Exemple 2

Un autre exemple de béton selon l'invention permet la réalisation d'une dalle-plancher de 20 cm d'épaisseur, portée par des colonnes de 25 cm x 25 cm de section et espacées de 7 m suivant x et y. Ce plancher est soumis à une charge répartie de 10 kN/m².

Le béton, dans ce cas, demeure de formulation identique au précédent (exemple 1) mais est armé au moyen de 150 kg/m³ de fibres d'acier ondulées de diamètre 1,6 mm et de longueur 60 mm.

### Exemple 3

Un troisième exemple concerne un radier de fondation installé sous un bâtiment de bureaux ou d'appartements comportant 11 niveaux au total, les colonnes ou les voiles étant espacés de 6 m et le radier étant posé sur un sol admettant une pression de service de 0,1 N/mm². La surcharge sur les colonnes atteint 3500 kN dans ce cas. Un radier de 600 mm d'épaisseur est prévu.

Les proportions du mélange sont les suivantes:
- ciment : 350 kg/m³
- granulats : sable 0/4 mm : 800 kg/m³
   pierraille 4/14 mm : 800 kg/m³
   pierraille 7/20 mm : 250 kg/m³
- eau : 175 kg/m³
- super-plastifiant : 5 kg/m³
- Fibres d'acier : diamètre : 1,3 mm ; longueur : 50 mm ; type ondulé et fil constitutif de 800 N/mm². Dosage : 100 kg/m³.

Afin d'assurer de bonnes conditions de pompage, cette formulation comprend de préférence au moins 450 kg/m³ de matières fines passant sous le tamis de 200 µm y compris le ciment. En cas de besoin, on peut compenser le défaut de fines par l'ajout d'un filler adéquat.

### Exemple 4

Un autre mélange de béton selon l'invention est proposé ci-dessous :
ciment: 350 kg/m³, et le reste comme à l'exemple 3, mais armé de fibres d'acier de 1,5 mm de diamètre et de longueur 60 mm, de forme ondulée ou avec des extrémités aplaties, mélangées à raison de 140 kg/m³ permettant la réalisation d'un plancher d'étage ayant:
   - des colonnes de 300 x 300 mm
   - une portée entre les colonnes: 7 m
   - une épaisseur de la dalle: 220 mm
   - une surcharge d'exploitation: 8 kN/m².

## Revendications

1. Mélange de béton de fibres métalliques à base de ciment, d'éléments granulaires et d'eau, comprenant des fibres métalliques ayant :
un diamètre compris entre 1,15 mm et 1,8 mm,
un coefficient de forme compris entre 35 et 45, et
dans lequel la quantité de ces fibres métalliques est telle que leur masse est d'au moins 80 kg/m³ de béton durci.

2. Mélange de béton selon la revendication 1, dans lequel les fibres métalliques ont un coefficient de forme de l'ordre de 40.

3. Mélange de béton selon la revendication 1 ou 2, dans lequel les fibres métalliques ont une longueur comprise entre 45 et 65 mm.

4. Mélange de béton selon l'une quelconque des revendications précédentes, dans lequel le dosage en fibres métalliques est entre 80 et 180 kg/m³.

5. Mélange de béton selon l'une quelconque des revendications précédentes, dans lequel le ciment a une taille de grains comprise entre 1 et 100 µm.

6. Mélange de béton selon l'une quelconque des revendications précédentes, dans lequel les éléments granulaires comprennent du sable ayant une taille de grains entre 1 et 5 mm.

7. Mélange de béton selon l'une quelconque des revendications précédentes, dans lequel les éléments granulaires comprennent des éléments grossiers de grosseur comprise entre 5 et 25 mm.

8. Mélange de béton selon l'une quelconque des revendications précédentes, dans lequel les fibres métalliques sont des fibres en fil d'acier.

9. Mélange de béton selon l'une quelconque des revendications précédentes, dans lequel les fibres métalliques ont une forme droite, ondulée, crénelée ou avec crochets, ou une combinaison de ces formes.

10. Elément de béton de fibres métalliques obtenu par coulage et durcissement d'un mélange de béton selon l'une quelconque des revendications précédentes.

11. Elément de béton selon la revendication 10, lequel est obtenu par coulage dans un coffrage ou moule.

12. Elément de béton selon la revendication 10 ou 11, ledit élément ayant une forme généralement plane et un rapport d'élancement jusqu'à 35 et ne comportant pas d'armatures traditionnelles.

13. Utilisation d'un élément de béton selon l'une quelconque des revendications 10 à 12 comme élément structurel ou décoratif dans une construction, notamment comme dalle-plancher, voile, mur de soutènement, poutre, colonne, semelle de fondation ou radier.

14. Utilisation d'un mélange de béton selon l'une quelconque des revendications 1 à 9 pour la réalisation, par coulage dans un moule ou coffrage, d'un élément structurel en béton tel qu'une dalle-plancher, un voile, un mur de soutènement, une semelle de fondation, un radier, une poutre ou une colonne.

15. Utilisation d'un mélange de béton selon l'une quelconque des revendications 1 à 9 comme béton prêt à l'emploi.

## Claims

1. A metal fiber concrete mix based on cement, aggregates and water, which includes metal fibers having,
a diameter of between 1.15 mm and 1.8 mm,
an aspect ratio of between 35 and 45; and
in which the quantity of these metal fibers is such that their weight is at least 80 kg/m³ of hardened concrete

2. The concrete mix as claimed in claim 1, in which the metal fibers have an aspect ratio of around 40.

3. The concrete mix as claimed in either of claims 1 and 2, in which the metal fibers have a length of between 45 and 65 mm

4. The concrete mix as claimed in any one of the preceding claims, in which the dosage of metal fiber is between 80 and 180 kg/m³.

5. The concrete mix as claimed in any one of the preceding claims, in which the cement has a grain size of between 1 and 100 µm

6. The concrete mix as claimed in any one of the preceding claims, in which the aggregates comprise sand having a grain size of between 1 and 5 mm.

7. The concrete mix as claimed in any one of the preceding claims, in which the aggregates comprise coarse elements with a size of between 5 and 25 mm

8. The concrete mix as claimed in any one of the preceding claims, in which the metal fibers are steel wire fibers

9. The concrete mix as claimed in any one of the preceding claims, in which the metal fibers have a straight, corrugated, ribbed or hooked shape, or a combination of these shapes

10. A metal fiber concrete element obtained by pouring and hardening a concrete mix as claimed in any one of the preceding claims,

11. The concrete element as claimed in claim 10, which is obtained by pouring into a formwork or mold

12. The concrete element as claimed in claim 10 or 11, said element having a generally plane shape and a slenderness ratio of up to 35, but containing no conventional reinforcements

13. The use of a concrete element as claimed in any ane of claims 10 to 12 as structural or decorative element in a construction, especially as a floor slab, shell, retaining wall, beam, column, foundation slab or raft

14. The use of a concrete mix as claimed in any one of claims 1 to 9 for the construction, by pouring into a mold or formwork, a structural concrete element such as a floor slab, a shell, a retaining wall, a foundation slab, a raft, a beam or a column

15. The use of a concrete mix as claimed in any one of claims 1 to 9 as ready mixed concrete.

## Patentansprüche

1. Metallfaserbetongemisch auf Basis von Zement, Kornelementen und Wasser, enthaltend Metallfasern mit:
einem Durchmesser von 1,15 mm bis 1,8 mm,
einem Formbeiwert von 35 bis 45, und
bei dem die Menge dieser Metallfasern so gewählt ist, dass ihre Masse mindestens 80 kg/m³ Festbeton beträgt

2. Betongemisch nach Anspruch 1, bei dem die Metallfasern einen Formbeiwert von etwa 40 haben

3. Betongemisch nach Anspruch 1 oder 2, bei dem die Metallfasern eine Länge von 45 bis 65 mm haben

4. Betongemisch nach irgendeinem der vorhergehenden Ansprüche, bei dem die Metallfaserdosierung 80 bis 180 kg/m³ beträgt

5. Betongemisch nach irgendeinem der vorhergehenden Ansprüche, bei dem der Zement eine Korngröf3e von 1 bis 100 µm hat

6. Betongemisch nach irgendeinem der vorhergehenden Ansprüche, bei dem die Kornelemente Sand mit einer Korngröße von 1 bis 5 mm enthalten

7. Betongemisch nach irgendeinem der vorhergehenden Ansprüche, bei dem die Kornelemente grobe Elemente von 5 bis 25 mm Dicke enthalten.

8. Betongemisch nach irgendeinem der vorhergehenden Ansprüche, bei dem die Metallfasern Fasern aus Stahldraht sind

9. Betongemisch nach irgendeinem der vorhergehenden Ansprüche, bei dem die Metallfasern eine gerade, wellige, gezackte oder hakige Form oder eine Kombination daraus haben.

10. Metallfaserbetonelement, hergestellt durch Gießen und Erhärten eines Betongemischs nach irgendeinem der vorhergehenden Ansprüche

11. Betonelement nach Anspruch 10, welches durch Gießen in eine Schalung oder Gießform hergestellt wird

12. Betonelement nach Anspruch 10 oder 11, wobei das Element eine allgemein flache Form und ein Schlankheitsverhältnis von bis zu 35 hat und keine herkömmlichen Bewehrungen aufweist

13. Verwendung eines Betonelements nach irgendeinem der Ansprüche 10 bis 12 als Struktur- oder Dekorelement in einem Bauwerk, insbesondere als Bodenplatte, Wand, Stützmauer, Balken, Säule, Fundamentplatte oder Sohle.

14. Verwendung eines Betongemischs nach irgendeinem der Ansprüche 1 bis 9 für die Herstellung - durch Gießen in eine Gießform oder Schalung - eines Strukturelements aus Beton, wie einer Bodenplatte, einer Wand, einer Stützmauer, einer Fundamentplatte, einer Sohle, eines Balkens oder einer Säule

15. Verwendung eines Betongemischs nach irgendeinem der Ansprüche 1 bis 9 als Fertigbeton
